# EUROPÄISCHE PATENTSCHRIFT

(11) **EP 2 981 936 B1**
(45) Veröffentlichungstag und Bekanntmachung des Hinweises auf die Patenterteilung: **05.06.2024**
(21) Anmeldenummer: 14715571.7
(22) Anmeldetag: 02.04.2014
(51) Int. Cl.: G06K 19/077

(54) **WERT- ODER SICHERHEITSPRODUKT, VERFAHREN ZUR HERSTELLUNG DES WERT- ODER SICHERHEITSPRODUKTES SOWIE KONTAKTLOSE DATENÜBERTRAGUNGSEINRICHTUNG**
VALUE OR SECURITY PRODUCT, METHOD FOR PRODUCING THE VALUE OR SECURITY PRODUCT, AND CONTACTLESS DATA TRANSMISSION DEVICE
PRODUIT DE VALEUR OU DE SÉCURITÉ, PROCÉDÉ POUR LE FABRIQUER AINSI QUE SYSTÈME DE TRANSMISSION DE DONNÉES SANS CONTACT

(30) Priorität: 05.04.2013 DE 102013206094
(43) Veröffentlichungstag der Anmeldung: 10.02.2016
(73) Patentinhaber: Bundesdruckerei GmbH, 10969 Berlin (DE)
(72) Erfinder: FERBER, Alexander, 12105 Berlin (DE); TRÖLENBERG, Stefan, 15749 Mittenwalde OT Ragow (DE)
(74) Vertreter: Patentanwälte Bressel und Partner mbB
(86) Internationale Anmeldenummer: PCT/EP2014/056603
(87) Internationale Veröffentlichungsnummer: WO 2014/161889

(56) Entgegenhaltungen:
- EP-A1- 2 079 107
- EP-A2- 0 972 636
- WO-A1-2008/031584
- DE-A1-102009 032 678
- DE-A1-102009 060 862
- DE-A1-102011 050 794

## Beschreibung

### Gebiet der Erfindung:

Die vorliegende Erfindung betrifft ein Wert- oder Sicherheitsprodukt, ein Verfahren zur Herstellung des Wert- oder Sicherheitsproduktes sowie eine kontaktlose Datenübertragungseinrichtung. Insbesondere betrifft die vorliegende Erfindung ein Wert- oder Sicherheitsprodukt, das eine kontaktlose Datenübertragungseinrichtung mit einer Antenne und einem elektronischen Schaltungselement, insbesondere mit einem Halbleiterchip, aufweist (beispielsweise RFID: radio frequency identification devices).

### Hintergrund der Erfindung:

Kontaktlose Datenübertragungseinrichtungen mit einer Antenne und einem elektronischen Schaltungselement sind bekannt. Zur Datenspeicherung und/oder Datenverarbeitung beispielsweise in dem Wert- oder Sicherheitsdokument werden bereits seit längerer Zeit elektronische Schaltungselemente in das Dokument integriert, mit denen Daten gespeichert und/oder verarbeitet werden können. Erfindungsgemäß werden unter einem elektronischen Schaltungselement insbesondere Halbleiterchips verstanden, insbesondere solche, welche zur Speicherung und Verarbeitung von Daten geeignet sind. Insbesondere können die elektronischen Schaltungselemente elektronische Halbleiterschaltungselemente sein. Die elektronischen Schaltungselemente umfassen insbesondere sogenannte RFID-Chips, welche zur kontaktlosen Kommunikation geeignet sind. RFID-Chips können vergleichsweise einfach aufgebaut sein, z.B. nur eine Seriennummer enthalten und diese bei Aktivierung kontaktlos übermitteln, oder es kann sich um Speicherchips mit Verschlüsselung handeln, wie diese zum Beispiel in elektronischen Reisedokumenten eingesetzt werden. Zur Datenkommunikation mit externen Geräten kann beispielsweise eine Kontaktfeldmatrix mit mehreren Kontaktfeldern gemäß ISO 7816 dienen, die mit dem Chip verbunden sind und die beim Verwenden des Dokuments, beispielsweise einer Karte, über Ein- und Ausgabegeräte einen elektrischen Kontakt zu externen Datenquellen und -speichern herstellen.

Gemäß einer Weiterentwicklung von derartigen Wert- oder Sicherheitsdokumenten stehen auch kontaktlose Dokumente zur Verfügung, die ebenfalls elektronische Schaltungselemente zur Datenspeicherung und -verarbeitung enthalten und die über Ein- und Ausgabegeräte für den Datenaustausch mit externen Datenquellen zusätzlich über eine Antenne verfügen. Daten werden in diesem Falle mittels eines Schreib-/Lesegerätes mit den Schaltungselementen in dem Dokument dadurch ausgetauscht, dass das Schreib-/Lesegerät ein elektromagnetisches Wechselfeld mit einer Trägerfrequenz typischerweise im Radiowellenbereich erzeugt, das von der Antenne im Dokument detektiert und in elektrische Signale umgewandelt wird, die an das Schaltungselement weitergeleitet werden. Zur Ausgabe von von dem Dokument ausgehenden Daten erzeugt die Antenne ein entsprechendes elektromagnetisches Wechselfeld, das von dem Schreib-/Lesegerät detektiert wird. Derartige Transponder oder RFID sind ebenfalls seit einiger Zeit bekannt. Eine kontaktlose Kommunikation kann beispielsweise gemäß ISO 14443 erfolgen.

Zur Herstellung von Dokumenten, die Displayelemente enthalten, ist in DE 10 2010 050 794 A1 das Problem angegeben, dass die einzubettenden elektronischen Bauteile bei der Herstellung solcher kartenförmigen Dokumente bei hohen Temperaturen und Prozessdrucken zerstört werden. Als Lösung wird unter anderen angegeben, dass zunächst ein Kartenrohling getrennt vom Displaymodul hergestellt wird, wobei in den Kartenrohling eine Kavität eingefräst wird, in welcher nach der Fertigstellung und Prüfung des Kartenrohlings und des Displaymoduls das Displaymodul eingesetzt wird. Des Weiteren wird vorgeschlagen, einen Schichtaufbau aus mehreren Lagen zu schaffen, bei dem zwischen einer Karten-Substratlage und einem darauf aufgebrachten Chipmodul zumindest eine Kompensationslage vorgesehen ist.

Aus DE 10 2009 060 862 A1 geht ferner ein Verfahren zum Laminieren von Folienlagen hervor, das insbesondere zur Herstellung von Sicherheits- und Wertdokumenten mit darin integrierten Halbleiterbauelementen vorgesehen ist. Die Halbleiterbauelemente dienen beispielsweise zur Verifikation der Dokumente, wobei Daten zur Authentifizierung im Chip gespeichert und kontaktlos auslesbar sind (RFID). Das Laminierverfahren sieht zur Vermeidung von durch das Laminieren verursachten Vorschädigungen von Leiterbahnen in einem Sicherheits- und Wertdokument eine Laminier-Vorgehensweise vor, bei der eine das elektronische Bauelement tragende Trägerfolienlage und eine Fließfolienlage sowie gegebenenfalls eine Ausgleichsfolienlage unter Bildung eines Folienlagenstapels gestapelt werden, wobei die Ausgleichsfolienlage zwischen den beiden anderen Folienlagen angeordnet wird und der Stapel dann unter Einwirkung von Druck erwärmt wird, wobei ein Verbund der Folienlagen entsteht. Der Laminiervorgang wird so gestaltet, dass die Fließfolienlage erweicht, bevor die Trägerfolienlage erweicht. Dadurch kann das Material der Fließfolienlage unter dem angewendeten externen Druck beim Laminieren in die Hohlräume im Folienlagenstapel eindringen und den Chip umfließen, ohne dass bereits die Materialien der Trägerfolienlage und gegebenenfalls der Ausgleichsfolienlage weich werden und in diese Hohlräume eindringen.

Als Sicherheitsmerkmal in einem Wert- und/oder Sicherheitsdokument kann gemäß DE 10 2008 028 705 A1 auch beispielsweise ein Sicherheitsfaden, beispielsweise ein Hologrammfaden, in das Dokument eingebracht werden. Ein Hologrammfaden ist demnach durch ein in Form eines Streifens vorliegendes beugendes Element mit einem metallisierten Bereich, nämlich ein Hologramm, gebildet.

Aus der DE 10 2011 050 794 A1 sind ein Sicherheits- oder Wertdokument sowie ein Verfahren zu dessen Herstellung bekannt. Das Sicherheits- oder Wertdokument umfasst mindestens einen Kartenkörper aus mehreren Lagen und zumindest ein Displaymodul, wobei zwischen dem Displaymodul und einer die Antenne aufnehmenden Karten-Substratlage zumindest eine Kompensationslage vorgesehen ist.

Aus der DE 10 2009 032 678 A1 sind ein Verfahren und eine Vorrichtung zur Herstellung eines Inlays für einen Folienverbund sowie einen Folienverbund, insbesondere für die Weiterverarbeitung beispielsweise zu einer Smart Card, bekannt, bei denen eine Trägerfolie mit mehreren darauf angeordneten und einander zugeordneten elektronischen Bauelementen einer Bilderfassungseinrichtung zugeführt wird, durch welche die Position von einem elektronischen Bauelement als Nutzen erfasst wird, bei dem eine auf der Trägerfolie aufzubringende lasersensitive Ausgleichsfolie zunächst einer Laserschneideinrichtung zugeführt wird, bei dem die durch die Bilderfassungseinrichtung erfassten Daten über die Position des jeweiligen elektronischen Bauelementes auf der Trägerfolie an die Laserschneideinrichtung übermittelt werden und die Laserschneideinrichtung zur Herstellung von Aussparungen, die an die jeweilige Position der elektronischen Bauelemente angepasst sind, angesteuert wird, bei dem die Ausgleichsfolie mit den daran eingebrachten Aussparungen und das Trägermaterial in einer Zusammenführstation zusammengeführt und passergenau zueinander ausgerichtet zu einem Inlay fixiert werden, wobei mit der Laserschneideinrichtung zur Herstellung der Aussparungen, mit einer weiteren Laserschneideinrichtung oder mit einer Markierungseinrichtung für jeden Nutzen oder eine Gruppe von Nutzen eine Steuermarke auf die Ausgleichsfolie in Abhängigkeit von der jeweiligen erfassten Position des elektronischen Bauelementes auf der Trägerfolie aufgebracht wird.

Aus der WO 2008/031584 A1 ist ein Datenträger mit Transponder bekannt. In dem Datenträger mit Transponder und einem Sicherheitsfaden, -band oder -streifen, der vorzugsweise als Fensterfaden ausgebildet ist, wird ein Unterbrechungsabschnitt der Transponderantenne, die als mehrwindige Antennenspule ausgebildet sein kann, durch eine separate Leiterbrücke vervollständigt, wobei die Leiterbrücke durch den Sicherheitsfaden gebildet wird. Im Falle einer mehrwindigen Antennenspule und einem Fensterfaden, bilden voneinander beabstandete Fenster des Fensterfadens separate Kontaktflächen für an den Unterbrechungsabschnitt angrenzende Enden der Antennenspule.

Die EP0972636 A2 zeigt Kontaktloskarten bestehend aus einer oberen und unteren Deckfolie. Innenfolien sind lokal mit Ausnehmungen versehen, um darin ein elektronische Bauteil, insbesondere ein Chipmodul mit seinem Modulträger unterzubringen. Im allgemeinen ist an das elektronische Bauteil eine Antenne angebondet. Sie kann ebenfalls in einer passenden Aussparung einer Innenfolie verlegt sein, meist wird sie jedoch einfach auf der Oberseite einer Folie platziert.

Es hat sich herausgestellt, dass Leiterstrukturen, beispielsweise eine RFID-Antenne, in Wert- oder Sicherheitsdokumenten dann geschädigt werden können, wenn die Dokumente zusätzlich Sicherheitskomponenten enthalten, deren Dicke beispielsweise in der Größenordnung der Dicke der Folienlagen liegt. Diese Schädigungen können in Form von Anrissen bis hin zu vollständigen Unterbrechungen der Leiterstruktur vorliegen.

### Aufgabe der Erfindung:

Der Erfindung liegt somit die Aufgabe zugrunde, ein Wert- oder Sicherheitsprodukt sowie ein Herstellverfahren hierfür zu schaffen, mit denen die genannten Schädigungen nicht entstehen. Insbesondere soll gewährleistet sein, dass die Prozessausbeute bei der Herstellung dieser Produkte unter Einhaltung ungeschädigter elektrischer Leiterstrukturen auch bei Durchführung eines Laminierverfahrens zur Bildung eines stoffschlüssigen Verbundes von mehreren Folienlagen, von denen zumindest eine Folienlage die elektrischen Leiterstrukturen trägt und wobei der Folienlagenverbund zudem eine weitere Sicherheitskomponente, wie einen Sicherheitsfaden, enthält, deutlich höher ist als bei herkömmlichen Herstellverfahren.

### Definitionen:

Soweit in der Beschreibung und in den Ansprüchen der vorliegenden Anmeldung der Begriff ,Wert- oder Sicherheitsprodukt', das insbesondere ein Wert- und/oder Sicherheitsdokument oder ein Sicherheitselement/Transferelement sein kann, verwendet wird, ist darunter beispielsweise ein Reisepass, Personalausweis, Führerschein, ein Zugangskontrollausweis oder eine andere ID-Karte, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, (Spiel-)Jeton oder ein anderes Dokument zu verstehen. Ein erfindungsgemäßes Produkt kann auch ein Sicherheitselement, beispielsweise ein Aufkleber, Haftetikett (beispielsweise zur Artikelsicherung) oder dergleichen, sein, das das erfindungsgemäße Sicherheitsmerkmal aufweist und das mit einem Vorprodukt eines Wert- und/oder Sicherheitsdokuments oder eines anderen Artikels, beispielsweise mit einem zu markierenden Produkt, dessen Echtheit zu garantieren ist, unlösbar verbunden werden kann, um das Wert- und/oder Sicherheitsdokument oder diesen markierten Artikel zu bilden. Das Wert- oder Sicherheitsprodukt ist insbesondere eine Smartcard. Das Wert- oder Sicherheitsdokument kann im ID 1-, ID 2-, ID 3- oder in irgendeinem anderen normierten oder nicht normierten Format vorliegen, beispielsweise in Heftform, wie bei einem passähnlichen Gegenstand, oder beispielsweise in Kartenform. Ein Wert- oder Sicherheitsprodukt ist im Allgemeinen ein Laminat aus mehreren Folienlagen, vorzugsweise Polymerlagen, die passergenau unter Wärmeeinwirkung und unter erhöhtem Druck flächig miteinander verbunden sind. Diese Produkte sollen den normierten Anforderungen genügen, beispielsweise gemäß ISO 10373, ISO/IEC 7810, ISO 14443. Die Folienlagen bestehen beispielsweise aus einem Material, das sich für eine Lamination eignet.

Das Wert- oder Sicherheitsprodukt kann aus einem Polymer gebildet sein, das ausgewählt ist aus einer Gruppe, umfassend Polycarbonat (PC), insbesondere Bisphenol A-Polycarbonat, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate. Außerdem kann das Produkt auch aus mehreren dieser Materialien hergestellt sein, beispielsweise indem die einzelnen Folienlagen aus unterschiedlichen Materialien gebildet sind, wobei einige Folienlagen auch aus Papier und/oder Pappe und/oder Glas und/oder Metall und/oder Keramik bestehen können. Bevorzugt besteht es aus PC, PET oder PC/TPU/PC. Die Polymere können entweder ungefüllt oder gefüllt vorliegen. Im ersterem Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus 3 bis 12, vorzugsweise 4 bis 10 Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise ein kinegraphisches Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

### Beschreibung der Erfindung:

Gemäß einem ersten Aspekt der vorliegenden Erfindung wird die vorstehend angegebene Aufgabe durch das erfindungsgemäße Wert- oder Sicherheitsprodukt gemäß Anspruch 1 gelöst.

Das Wert- oder Sicherheitsprodukt ist in Form eines aus mindestens zwei Folienlagen gebildeten Laminatkörpers ausgebildet und weist mindestens eine in einer innenliegenden ersten Ebene in dem Laminatkörper angeordnete elektrische Leiterstruktur sowie mindestens eine die mindestens eine elektrische Leiterstruktur in mindestens einem Überlappungsbereich überlappende und sich in einer zweiten Ebene befindende Sicherheitskomponente auf. Zur Vermeidung der oben erwähnten Schädigungen der mindestens einen elektrischen Leiterstruktur befindet sich in dem Laminatkörper, vorzugsweise in der ersten Ebene in dem Laminatkörper, und zwar benachbart zu dem mindestens einen Überlappungsbereich mindestens eine Ausgleichsstruktur, deren Höhe mindestens genauso groß ist wie die Höhe der mindestens einen elektrischen Leiterstruktur in dem Überlappungsbereich.

Gemäß einem zweiten Aspekt der vorliegenden Erfindung wird die vorstehend angegebene Aufgabe durch das erfindungsgemäße Herstellverfahren für das Wert- oder Sicherheitsprodukt gemäß Anspruch 11 gelöst.

Die mindestens eine Sicherheitskomponente kann auf eine Oberfläche der ersten Folienlage, auf der keine elektrische Leiterstruktur erzeugt wird, aufgebracht werden. In diesem Falle wird zunächst die erste Folienlage zum Erzeugen der mindestens einen elektrischen Leiterstruktur in einer ersten Ebene sowie zum Aufbringen der mindestens einen Sicherheitskomponente in einer zweiten Ebene bereitgestellt. Nach dem Erzeugen der mindestens einen elektrischen Leiterstruktur und Aufbringen der mindestens einen Sicherheitskomponente auf der ersten Folienlage wird diese mit weiteren Folienlagen zusammengetragen und laminiert.

Vor Verfahrensschritt (d) wird außerdem auf eine der Oberflächen einer der ersten, zweiten oder weiteren Folienlage benachbart zu dem mindestens einen Überlappungsbereich mindestens eine Ausgleichsstruktur aufgebracht, deren Höhe mindestens genauso groß ist wie die Höhe der mindestens einen elektrischen Leiterstruktur in dem Überlappungsbereich. Vorzugsweise wird die mindestens eine Ausgleichsstruktur auf die mit der mindestens einen elektrischen Leiterstruktur versehene Oberfläche der ersten Folienlage aufgebracht.

Gemäß einem dritten Aspekt der vorliegenden Erfindung wird die vorstehend angegebene Aufgabe durch ein Vorprodukt gemäß Anspruch 10 gelöst, das zu dem erfindungsgemäßen Wert- oder Sicherheitsprodukt weiterverarbeitet werden kann. Dieses Vorprodukt kann die vorstehend für das Wert- oder Sicherheitsprodukt angegebenen Bestandteile, nämlich die erste Folienlage mit der mindestens einen elektrischen Leiterstruktur (und gegebenenfalls mit der mindestens einen Sicherheitskomponente) und (gegebenenfalls) die zweite Folienlage mit der mindestens einen Sicherheitskomponente sowie gegebenenfalls noch weitere Folienlagen aufweisen, nicht jedoch beispielweise transparente Schutzschichten, weitere, beispielsweise personalisierende, Sicherheitsmerkmale und dergleichen, die in einem fertiggestellten Wert- oder Sicherheitsprodukt enthalten sind. Beispielsweise kann dieses Vorprodukt auch die Personalisierungsseite eines Reisepasses sein, sodass das Vorprodukt durch Einbinden in ein Reisepassbuch, das lediglich die Deck- und Visaseiten aufweist, zu dem fertiggestellten Wert- oder Sicherheitsprodukt weiterverarbeitet werden kann.

Ganz besonders bevorzugt kann das Vorprodukt eine kontaktlose Datenübertragungseinrichtung sein, insbesondere ein gedrucktes Inlay. Die kontaktlose Datenübertragungseinrichtung weist mindestens eine Folienlage mit mindestens einer Antenne, die auf einer Oberfläche einer der mindestens einen Folienlage angeordnet ist, und mit mindestens einem elektronischen Schaltungselement, insbesondere elektronischen Halbleiterschaltungselement, das mit der mindestens einen Antenne verbunden ist, auf. Auf einer der Oberflächen der Folienlage befindet sich zusätzlich mindestens eine Ausgleichsstruktur, deren Höhe mindestens genauso groß ist wie die Höhe der mindestens einen elektrischen Leiterstruktur. Außerdem kann zusätzlich mindestens eine Sicherheitskomponente auf der Seite der kontaktlosen Datenübertragungseinrichtung angeordnet sein, auf der sich die mindestens eine Antenne nicht befindet.

Falls mehrere elektrische Leiterstrukturen vorhanden sind und diese unterschiedliche Höhen haben, ist die Höhe der mindestens einen elektrischen Ausgleichsstruktur mindestens genauso groß wie die Höhe derjenigen elektrischen Leiterstruktur, die am niedrigsten ist, vorzugsweise aber mindestens genauso groß wie die Höhe derjenigen elektrischen Leiterstruktur, die am höchsten ist. Die Höhe der mindestens einen elektrischen Ausgleichsstruktur kann prinzipiell beliebig groß sein. Aus praktischen Gründen ist sie nach oben durch den Materialeinsatz und die Notwendigkeit begrenzt, dass die Oberfläche des Wert- oder Sicherheitsproduktes nach dessen Herstellung eben sein soll. Daher liegt die obere Grenze der Höhe der mindestens einen elektrischen Ausgleichsstruktur vorzugsweise bei maximal dem zwanzigfachen der Höhe der mindestens einen elektrischen Leiterstruktur, weiter bevorzugt beim zehnfachen, noch weiter bevorzugt beim fünffachen und am meisten bevorzugt beim doppelten der Höhe der mindestens einen elektrischen Ausgleichsstruktur.

Durch die Einbringung der zusätzlichen Sicherheitskomponente(n) in den Folienstapel wird ein beim Laminieren auf den Folienstapel ausgeübter Druck auf die elektrischen Leiterstrukturen dort punktuell erhöht, wo die zusätzliche Sicherheitskomponente in dem Stapel mit den Leiterstrukturen bereichsweise überlappt, insbesondere diese kreuzt. Dies ist umso stärker ausgeprägt, je dicker diese Sicherheitskomponente ist und je steifer diese beim Laminierprozess ist. Indem die Ausgleichsstrukturen benachbart zu dem mindestens einen Überlappungsbereich (der auch ein Kreuzungsbereich sein kann) gebildet werden, wird dieser Druck von den Ausgleichsstrukturen abgefangen und von den elektrischen Leiterstrukturen weggeleitet, da deren Höhe mindestens genauso groß ist wie diejenige der elektrischen Leiterstrukturen. Der beim Laminieren auf den Folienstapel ausgeübte Druck verteilt sich auf die elektrischen Leiterstrukturen und die Ausgleichsstrukturen. Dadurch wird die Kraft, die auf die elektrischen Leiterstrukturen wirkt, verringert. Wenn die Ausgleichsstrukturen höher sind als die elektrischen Leiterstrukturen, wird das Material der Ausgleichsstrukturen beim Laminierschritt nivelliert, sodass die wirksame Fläche der Ausgleichsstrukturen noch vergrößert wird. Die elektrischen Leiterstrukturen werden durch die Einbringung der Sicherheitskomponente daher nicht oder nur unwesentlich verstärkt belastet. Es hat sich herausgestellt, dass die Einbringung derartiger Ausgleichsstrukturen dafür sorgt, dass sich die genannten Schädigungen der elektrischen Leiterstrukturen, nämlich Deformationen, Anrisse oder Durchtrennungen, auch beim Laminierprozess nicht mehr einstellen. Dadurch wird eine größere Zuverlässigkeit des hergestellten Produktes erreicht. Ferner wird dadurch eine erhöhte Laminationstemperatur selbst dann ermöglicht, wenn die elektrischen Leiterstrukturen ohne Bildung von Aussparungen in einer angrenzenden Folienlage, die den Verlauf der elektrischen Leiterstrukturen nachbilden, in ein Laminat einlaminiert werden.

Indem die Ausgleichsstrukturen ferner bevorzugt in derselben Ebene wie die elektrischen Leiterstrukturen gebildet werden, können erstere sehr wirtschaftlich in demselben Verfahrensschritt gebildet werden wie letztere, sodass kein zusätzlicher Prozessschritt erforderlich ist.

Die Ausgleichstrukturen werden benachbart und somit in geringem Abstand zu den Leiterstrukturen gebildet. Der Abstand sollte so gering wie möglich sein. Ein minimaler Abstand ist demnach allein durch die verwendete Prozesstechnik, beispielsweise Siebdruck, vorgegeben. Grundsätzlich können breitere Ausgleichsstrukturen besser zu einer Schädigungsminderung beitragen als schmalere Ausgleichsstrukturen, vorausgesetzt sie sind mindestens so hoch wie die Leiterstrukturen.

Die Ausgleichsstrukturen können beliebig geformt sein. Sie erstrecken sich vorzugsweise zumindest über einen Bereich, der sich parallel zum Überlappungsbereich zumindest über dessen gesamte Breite erstreckt. Dadurch können die Ausgleichsstrukturen den punktuellen Druck über den gesamten Überlappungsbereich abfangen. Vorzugsweise erstrecken sich die Ausgleichsstrukturen über die Überlappungsbereiche hinaus, um den Laminierdruck besser abfangen zu können und um zudem fertigungstechnische Toleranzen, die zu einer Variation der Lage der Sicherheitskomponente im Folienstapel führen kann, zu kompensieren.

Die Ausgleichsstrukturen sind erfindungsgemäß in Form von Erhebungen ausgebildet.

Die Ausgleichsstrukturen können langgestreckt in Form von Streifen oder auch von beliebig anders geformten Erhebungen ausgebildet sein, beispielsweise in Form von Punkten (kleinen Flächen, die eine beliebige Form aufweisen können, beispielsweise Kreisform). Die Punkte können beispielsweise in einem Raster angeordnet sein, beispielsweise einem regelmäßig gebildeten Raster, etwa einem hexagonalen (mit auf Lücke stehenden Punkten) oder einem quadratischen oder rechteckigen Raster (mit einander gegenüber stehenden Punkten). Sie können sich insbesondere parallel oder zumindest im Wesentlichen parallel zu den Leiterstrukturen erstrecken.

Jeweils eine oder mehrere Ausgleichsstrukturen können an jeweils einer der beiden Seiten einer Leiterstruktur angeordnet sein, oder eine oder mehrere Ausgleichsstrukturen können ausschließlich an einer der beiden Seiten einer Leiterstruktur angeordnet sein. Falls jeweils mehrere Ausgleichstrukturen an der oder den Seiten einer Leiterstruktur angeordnet sind, können diese beispielsweise (im Wesentlichen) parallel zueinander verlaufende Streifen bilden, die (im Wesentlichen) parallel zu der oder den Leiterstrukturen verlaufen. Auch ein durch Punkte gebildetes Raster kann langgestreckt in Form von Punktstreifen ausgebildet sein, die sich (im Wesentlichen) parallel zu den Leiterstrukturen erstrecken.

Falls mehrere zueinander beabstandete Leiterstrukturen ein Leiterstrukturbündel bilden, können die Ausgleichsstrukturen an jeweils einer Seite dieses Leiterstrukturbündels oder ausschließlich an einer Seite dieses Bündels angeordnet sein. Zusätzlich kann jeweils eine oder können jeweils mehrere Ausgleichsstrukturen zwischen einigen benachbarten oder zwischen allen benachbarten Leiterstrukturen angeordnet sein.

Die mindestens eine Leiterstruktur ist in der vorliegenden Erfindung durch eine Antennenstruktur gebildet. Ferner kann die Leiterstruktur spiralförmig mit einer oder mehreren Spiralwindungen ausgebildet sein. Diese Spiralwindungen können insbesondere parallel geführt sein. Somit kann die Antennenstruktur durch mindestens zwei Spiralwindungen gebildet sein.

In dieser bevorzugten Weiterbildung der vorliegenden Erfindung weist die mindestens eine elektrische Leiterstruktur jeweils mindestens zwei Spiralwindungen auf, und die mindestens eine Ausgleichsstruktur ist jeweils neben den mindestens zwei Spiralwindungen und/oder zwischen mindestens zwei der Spiralwindungen gebildet. Ferner ist es auch möglich, dass die elektrische Leiterstruktur durch eine einzelne Spiralwindung gebildet ist und dass die mindestens eine Ausgleichsstruktur einseitig oder beidseitig neben der Spiralwindung angeordnet ist.

In einer weiteren bevorzugten Weiterbildung der vorliegenden Erfindung ist die Höhe der mindestens einen Leiterstruktur, insbesondere der Spiralwindungen, in dem mindestens einen Überlappungsbereich geringer als in Bereichen außerhalb des Überlappungsbereiches, wobei sich der Bereich geringerer Höhe auch geringfügig über den Überlappungsbereich hinaus erstrecken kann, beispielsweise in Richtung der Erstreckung der Leiterstrukturen um bis zu jeweils 500 % der Länge des Überlappungsbereiches nach jeder Seite. Dadurch wird erreicht, dass die Ausgleichsstrukturen zu einer wirksameren Druckentlastung beitragen können, da das Verhältnis der jeweiligen Höhen der Ausgleichsstrukturen und der Leiterstrukturen durch diese Maßnahme günstig beeinflusst wird.

In einer weiteren bevorzugten Weiterbildung der vorliegenden Erfindung ist die Breite der mindestens einen Leiterstruktur, insbesondere der Spiralwindungen, in dem mindestens einen Überlappungsbereich größer als außerhalb des Überlappungsbereiches, wobei sich der Bereich breiterer Strukturen auch geringfügig über den Überlappungsbereich hinaus erstrecken kann, beispielsweise in Richtung der Erstreckung der Leiterstrukturen um bis zu jeweils 500 % der Länge des Überlappungsbereiches nach jeder Seite. Dadurch wird erreicht, dass die Gefahr der Unterbrechung oder substanziellen Beeinträchtigung der elektrischen Leitfähigkeit der Leiterstrukturen in diesem Bereich verringert wird. Denn dadurch wird die Neigung der Leiterstrukturen vermindert, dass kurze Risse eine Leiterbahn nicht auf deren gesamter Breite unterbrechen, sodass die elektrische Leitfähigkeit durch derartige Risse nicht beeinträchtigt wird.

In einer weiteren bevorzugten Weiterbildung der vorliegenden Erfindung ist die mindestens eine Leiterstruktur mit einer Drucktechnik, besonders bevorzugt mittels Siebdruck, gebildet. Diese Technik zur Herstellung von Leiterstrukturen ist kostengünstig und leicht durchführbar. Für den Siebdruck kann beispielsweise eine Leitpaste oder Leittinte eingesetzt werden. Geeignet ist jede übliche Leitpaste oder Leittinte, die die erforderliche elektrische Leitfähigkeit ergibt. Typische Leitpasten oder -tinten enthalten Metallpartikel, insbesondere Silber-, Kupfer- oder Aluminiumpartikel. Bevorzugt ist Silber. Es können auch versilberte oder verkupferte Partikel aus im Übrigen anderen Materialien eingesetzt werden. Vorteilhaft sind langgestreckte Partikel (Nadeln, Flakes/Plättchen), da mit diesen schon bei geringerer Konzentration in der Paste oder Tinte eine ausreichende elektrische Leitfähigkeit erreicht wird. Alternativ können auch intrinsisch elektrisch leitfähige organische Verbindungen, wie Polypyrrol, Polyanilin oder Polythiophen oder deren Derivate verwendet werden. Die Leitpaste oder -tinte ist im Hinblick auf die Verwendung im Siebdruck optimiert und enthält daher hierfür geeignete Bestandteile, wie Bindemittel, Lösungsmittel und dergleichen.

Die Dicke der gedruckten Leiterstrukturen liegt (im getrockneten Zustand) im Bereich von 5 µm bis 40 µmund bevorzugt im Bereich von 15 µm bis 25 µm. Die damit aufgedruckten schmalsten Strukturen haben eine Breite von 100 µm bis 300 µm, vorzugsweise ca. 200 µm.

Alternativ können die Ausgleichs- und Leiterstrukturen auch mit irgendeiner anderen Technik erzeugt werden. Denkbar ist beispielsweise ein Dispenserverfahren oder ein anderes Druckverfahren als die Siebdrucktechnik. Für die Ausgleichsstrukturen muss nicht notwendigerweise ein elektrisch leitfähiges Material verwendet werden. Vielmehr kann beispielsweise ein Polymer eingesetzt werden. Bekannt ist beispielsweise die Aufbringung eines Polymers mit dem Tintenstrahldruckverfahren oder einem Dispenserverfahren.

In einer weiteren bevorzugten Weiterbildung der vorliegenden Erfindung wird die mindestens eine Ausgleichsstruktur ebenfalls mit einer Drucktechnik, insbesondere mittels Siebdruck, mit einer Leitpaste oder Leittinte erzeugt, beispielsweise mit einer Silber-Leitpaste. Somit kann die mindestens eine Ausgleichsstruktur gleichzeitig mit der mindestens einen Leiterstruktur in demselben Herstellschritt auf die eine Oberfläche der ersten Folienlage aufgebracht werden. Selbstverständlich können die Ausgleichsstrukturen und die Leiterstrukturen auch in verschiedenen Prozessschritten erzeugt werden und somit auch auf unterschiedlichen Folienlagenoberflächen und mit unterschiedlichen Materialien. Die Leiterstrukturen und die Ausgleichsstrukturen können mit derselben oder mit unterschiedlichen Techniken erzeugt werden.

Die Siebdrucktechnik für die Herstellung der Leiter- und Ausgleichsstrukturen hat noch einen weiteren wesentlichen Vorteil gegenüber anderen Erzeugungsverfahren: Mittels Siebdruck gebildete Strukturen entstehen mit einer umso größeren Höhe je kleiner deren Strukturabmessungen parallel zur Folienlagenoberfläche sind, d.h. beispielsweise je schmaler und/oder kürzer diese Strukturen sind. Daher kann die Höhe dieser Strukturen durch Beeinflussung von deren Breite gezielt verändert werden.

Insbesondere durch Verringerung der Breite der Ausgleichsstrukturen kann deren Höhe vergrößert werden, sodass deren Eignung zum Druckentlasten beim Laminieren verbessert wird. Gleichermaßen kann die Höhe der Leiterstrukturen verringert werden, indem deren Breite vergrößert wird. Daher wird durch Verbreiterung der Leiterstrukturen zumindest im Überlappungsbereich bzw. in einem geringfügig größeren Bereich als dem Überlappungsbereich nicht nur der Vorteil einer geringeren Schädigungsneigung wegen der größeren Breite erreicht, sondern darüber hinaus auch eine geringere Höhe dieser Leiterstrukturen, sodass der punktuelle Druck beim Laminieren im Überlappungsbereich durch die vergleichsweise höheren Ausgleichsstrukturen wirksamer abgefangen werden kann. Durch die Verbreiterung der Leiterstrukturen ergeben sich daher zwei in ihrer Wirkung einander verstärkende positive Effekte.

In einer weiteren bevorzugten Weiterbildung der vorliegenden Erfindung ist die mindestens eine Sicherheitskomponente durch einen Sicherheitsfaden gebildet. Alternativ kann es sich auch um eine beliebige andere Sicherheitskomponente handeln, beispielsweise ein Hologramm-Patch, eine Mikrolinsen- oder Mikroprismenanordnung oder jeden anderen räumlich begrenzten Gegenstand, der beim Laminieren zu einer lokalen Druckerhöhung führt.

In einer besonders bevorzugten Weiterbildung der vorliegenden Erfindung ist der Sicherheitsfaden durch einen Hologrammfaden gebildet. Derartige Fäden sind üblicherweise durch ein schmales (streifenförmiges) Polymerlaminat oder eine schmale (streifenförmige) Polymerfolie mit einer darauf befindlichen Metallschicht gebildet, wobei sich zwischen dem Polymerlaminat oder der Polymerfolie und der Metallschicht zusätzlich eine Polymerschicht mit einer Oberflächenstruktur befindet, die beugungsaktiv ist, sodass die Metallschicht beugende Eigenschaften aufweist. Während die Leiter- und die Ausgleichsstrukturen vorzugsweise im Inneren des Laminats gebildet werden, wird der Sicherheitsfaden vorzugsweise auf einer der äußeren Lagen in das Laminat des Wert- oder Sicherheitsproduktes eingebracht. Beispielsweise kann der Sicherheitsfaden unmittelbar unter einer außenliegenden transparenten Schutzfolie angeordnet sein.

Eine kontaktlose Datenübertragungseinrichtung, die eine Antenne und die Ausgleichsstrukturen sowie ein mit der Antenne verbundenes Halbleiterschaltungselement aufweist, kann als Vorprodukt für ein erfindungsgemäßes Wert- oder Sicherheitsprodukt hergestellt werden und dann mit weiteren Folienlagen zusammengetragen und laminiert werden. Die Antenne und das Halbleiterschaltungselement befinden sich vorzugsweise auf derselben Oberfläche der Folienlage. Besonders bevorzugt liegt das Halbleiterschaltungselement als Bare Die (nicht gehäuster Chip) vor.

Das elektronische Schaltungselement kann insbesondere ein Chip sein. Der Chip wird auf der Folienlage befestigt und dabei mit der Antenne elektrisch kontaktiert. Hierzu kann insbesondere die Flip-Chip-Technik mit Flip-Chip-Klebetechnik eingesetzt werden, bei der der Chip zunächst mit Anschlusshöckern (Bumps) aus einem elektrisch gut leitenden Material (Au, Pd, Ni/Au) versehen und dann über Kopf, d.h. mit den Bumps auf die Anschlusskontakte der Antenne, auf der Folienlage befestigt wird. Beispielsweise wird der Chip mit einem anisotrop leitfähigen Kleber mit der Antenne elektrisch und mechanisch verbunden. Hierzu wird der Kleber beispielsweise mittels eines Dispensers auf die Anschlussstellen auf der Antenne aufgetragen. Anschließend wird der Chip dort platziert. Alternativ kann der Chip auch mittels eines kollabierten Lots mit der Antenne verbunden werden.

Vorzugsweise ist die Antenne spiralförmig ausgebildet und weist an deren Enden jeweils eine Kontaktstelle für die Verbindung mit dem Chip auf. Der Chip wird vorzugweise in Form einer Brücke über der spiralförmigen Antenne platziert und mit seinen Bumps auf die Kontaktierungsstellen der Antenne aufgesetzt. Hierzu können die Spiralwindungen und/oder deren Abstände voneinander im Überbrückungsbereich eine geringere Breite aufweisen als außerhalb des Überbrückungsbereiches. In einer weiteren Ausführungsform kann die Antenne auch konventionell mittels einer Brücke an einen Chip kontaktiert werden. Diese Ausführungsform ist insbesondere bei kleinen Chips bevorzugt.

Ferner kann das Wert- oder Sicherheitsprodukt auch ein oder mehrere Anzeigeelemente, beispielsweise OLEDs, aufweisen, die mit dem Chip elektrisch verbunden sind.

Zur Herstellung des Wert- oder Sicherheitsproduktes werden die mit der mindestens einen elektrischen Leiterstruktur und gegebenenfalls mit der mindestens einen Ausgleichsstruktur versehene erste Folienlage, ferner die mit der Sicherheitskomponente versehene zweite Folienlage sowie gegebenenfalls weitere Lagen, etwa eine dritte Lage, auf der sich die Ausgleichsstrukturen befinden, in Verfahrensschritt (d) zu einem Stapel zusammengetragen und anschließend unter Ausbildung einer stoffschlüssigen Verbindung zwischen den Folienlagen zu einem Polymerlaminat/Laminatkörper verbunden. Als weitere Lagen in dem zu laminierenden Stapel werden vorzugsweise eine Ausgleichslage und eine Fließfolienlage eingesetzt. Die Ausgleichslage weist an der Seite der kontaktlosen Datenübertragungsvorrichtung, auf der sich die elektrischen Leiterstrukturen und das elektronische Schaltungselement befinden, Aussparungen auf, in die das elektronische Schaltungselement hineinragt, wenn die Ausgleichslage und die kontaktlose Datenübertragungsvorrichtung passergenau übereinander gestapelt sind. Die Fließfolienlage wird ferner auf der der kontaktlosen Datenübertragungseinrichtung gegenüber liegenden Seite der Ausgleichslage angeordnet. Die Fließfolienlage kann wie die übrigen Lagen vorzugsweise aus PC, PET oder PC/TPU/PC gebildet sein, wobei vorzugsweise die Erweichungstemperatur der Fließfolienlage niedriger ist als die der übrigen Folienlagen, sodass sie beim Laminieren die durch die Aussparung gebildeten Hohlräume ausfüllen kann.

Für die Lamination werden mehrere Stapel der Folienlagen beispielsweise entweder gleichzeitig in einer Etagenpresse oder nacheinander in einer Durchlaufanlage unter Druckbeaufschlagung und Wärmeeinbringung prozessiert. Falls die Folienlagen aus PC gebildet sind, wird die Lamination typischerweise in einer Heiß/Kalt-Laminierpresse in einem ersten Schritt bei 170°C bis 200 °C und einem Druck von 50 N/cm² bis 600 N/cm² und in einem zweiten Schritt unter Kühlung etwa auf Raumtemperatur und unter demselben Druck durchgeführt. Im Falle von PET-G findet die Lamination bei einer niedrigeren Temperatur statt, beispielsweise bei 130°C.

Zur Veranschaulichung der vorliegenden Erfindung dienen ausgewählte Ausführungsbeispiele, die exemplarisch sind und die die Tragweite der Erfindung in keiner Weise beeinflussen. Diese Beispiele sind in nachfolgend beschriebenen Figuren wiedergegeben.
- Fig. 1: zeigt ein erfindungsgemäßes Wert- oder Sicherheitsprodukt in einer schematischen isometrischen Darstellung;
- Fig. 2: zeigt eine erfindungsgemäße kontaktlose Datenübertragungseinrichtung in einer schematischen isometrischen Darstellung;
- Fig. 3: zeigt die für eine Lamination zu einem Laminatkörper vorgesehenen Folienlagen gemäß dem erfindungsgemäßen Herstellverfahren in einer Anordnung übereinander in einer schematischen Querschnittsdarstellung (im Schnitt lll-lll von Fig. 1);
- Fig. 4: zeigt die in Fig. 3 dargestellten Folienlagen zu einem Stapel zusammengetragen und miteinander laminiert in einer schematischen Querschnittsdarstellung (im Schnitt lll-lll von Fig. 1);
- Fig. 5: zeigt einen Ausschnitt einer ersten Folienlage mit elektrischen Leiter- und Ausgleichsstrukturen in einer ersten Ausführungsform in einer schematischen Querschnittsdarstellung (im Schnitt lll-lll von Fig. 1);
- Fig. 6: zeigt einen Ausschnitt einer ersten Folienlage mit elektrischen Leiter- und Ausgleichsstrukturen in einer zweiten Ausführungsform in einer schematischen Querschnittsdarstellung (im Schnitt lll-lll von Fig. 1);
- Fig. 7: zeigt einen Ausschnitt einer Sicherheitskomponente in Form eines Sicherheitsfadens und elektrische Leiter- und Ausgleichsstrukturen in einer dritten Ausführungsform in einer schematischen Draufsicht;
- Fig. 8: zeigt einen Ausschnitt einer Sicherheitskomponente in Form eines Sicherheitsfadens und elektrische Leiter- und Ausgleichsstrukturen in einer vierten Ausführungsform in einer schematischen Draufsicht;
- Fig. 9: zeigt einen Ausschnitt einer Sicherheitskomponente in Form eines Sicherheitsfadens und elektrische Leiter- und Ausgleichsstrukturen in einer fünften Ausführungsform in einer schematischen Draufsicht.

In den Figuren bezeichnen gleiche Bezugszeichen gleiche Elemente oder Elemente mit derselben Funktion.

Das erfindungsgemäße Wert- oder Sicherheitsprodukt 100 kann insbesondere ein Wert- oder Sicherheitsdokument, beispielsweise eine Karte im ID 1-Format, sein. Die Karte weist eine Vorderseite 101 und eine Rückseite (nicht dargestellt) auf. Die Karte kann zum Beispiel zur Identifizierung einer Person oder als Kreditkarte oder Zahlungskarte dienen. Hierzu weist die Karte Personalisierungsdaten auf, insbesondere ein Gesichtsbild der Person, der diese Karte zugeordnet ist, etwa eine Fotografie der Person, sowie die Person individualisierende Information in Form von Klartext, etwa den Namen der Person, deren Geburtsdatum und -ort, Wohnort und dergleichen. Das Gesichtsbild und diese Information können beispielsweise in Feldern 105, 107 auf der Vorderseite sichtbar sein. Hierzu sind diese beiden Merkmale in Feldern auf der Vorderseite, aber innenliegend unter einer transparenten Schutzschicht, sichtbar. In einem weiteren Feld 106 kann weitere Information, beispielsweise eine Information über die Karte, über die die Karte ausgebende Stelle und dergleichen, enthalten sein.

Ferner befindet sich im Bereich der Vorderseite 101 sichtbar eine Sicherheitskomponente 190, die insbesondere zur Verifizierung der Echtheit der Karte 100 dient. Im vorliegenden Falle handelt es sich um einen Sicherheitsfaden, der ebenfalls innenliegend und durch die transparente Schutzschicht auf der Vorderseite der Karte hindurch sichtbar ist. Der Sicherheitsfaden kann insbesondere ein Hologrammfaden sein, d.h. ein streifenförmiges Hologramm, das aus einer Polymerfolie oder -schicht und mit einer oberflächlichen Beugungsstruktur sowie mit einer Metallschicht auf der Oberfläche, die mit der Beugungsstruktur versehen ist, besteht. Die Metallschicht weist dadurch ebenfalls diese Beugungsstruktur auf und bildet dadurch das Hologramm. Derartige Sicherheitselemente und deren Herstellung sind bekannt. Auf eine Beschreibung der Herstellung wird daher verzichtet.

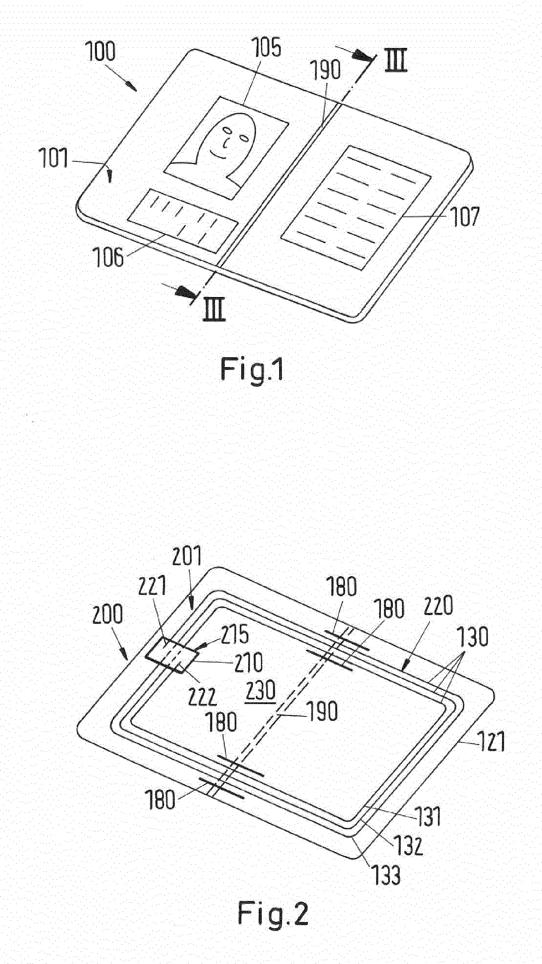

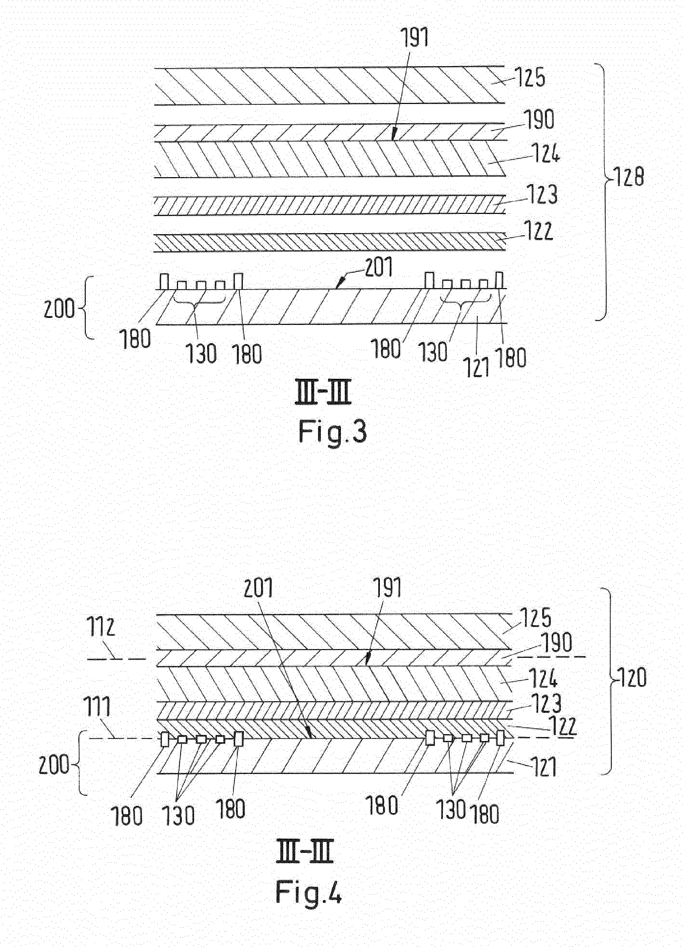

Das erfindungsgemäße Wert- oder Sicherheitsprodukt 100, im vorliegenden Fall die Wert- oder Sicherheitskarte, ist ein Laminat aus mehreren Laminatlagen, beispielsweise aus PC, die unter Laminierbedingungen zu einem Laminatkörper 120 verbunden sind, vorzugsweise zu einem monolithischen Laminatkörper, bei dem die einzelnen Lagen 121, 122, 123, 124, 125 miteinander verschmolzen sind, sodass deren Phasengrenzen nicht mehr erkennbar sind (Fig. 4). Eine innere Laminatlage 121 ist durch eine erfindungsgemäße kontaktlose Datenübertragungseinrichtung 200 gebildet. Diese Einrichtung ist in Fig. 2 gezeigt. Sie ist durch eine Polymerlage, eine darauf aufgebrachte Antenne 220 und einen mit der Antenne elektrisch verbundenen Halbleiterchip 210 gebildet. Die Laminatlage der kontaktlosen Datenübertragungseinrichtung kann beispielsweise aus PC bestehen oder dieses enthalten. Auf der Vorderseite 201 dieser Einrichtung ist die Antenne mit einem Druckverfahren, vorzugsweise mittels Siebdruck, erzeugt, wozu eine Silberleitpaste eingesetzt wird. Die Antenne ist aus einer einzigen Leiterbahn 130 gebildet, die durch mehrere parallel zueinander verlaufende Spiralwindungen 131, 132, 133 gebildet ist. Diese Spiralwindungen bilden ein Spiralwindungsbündel, die in geringem Abstand zum Rand der Datenübertragungseinrichtung verlaufen. Durch die Spiralwindungen wird eine innere Durchtrittsfläche 230 gebildet, durch die im Falle des Datenaustausches ein elektromagnetisches Wechselfeld hindurchtritt und eine Spannung in der Antenne generiert. Die Enden 221, 222 der Leiterbahn bilden eine erste und eine zweite Kontaktstelle zur elektrischen Verbindung der Antenne mit dem Halbleiterchip. Die Kontaktstellen befinden sich in einem Anschlussfeld 215 für den Halbleiterchip. Dieser liegt als Bare Die vor und weist Anschlusskontakte in Form von Bumps auf, die beispielsweise aus mit Gold (Au) überzogenem Nickel (Ni) bestehen (nicht dargestellt). Der Chip ist in Flip Chip-Technik und mittels Flip Chip-Klebetechnik im Anschlussfeld montiert, wobei die Anschlusskontakte des Chips nach unten weisen und mit den Kontaktstellen der Antenne verbunden sind. Für die elektrische und mechanische Verbindung des Chips mit der Antenne ist im Anschlussfeld ein anisotrop leitfähiger Kleber aufgetragen.

Die Lage des Sicherheitsfadens 190 in dem Wert- oder Sicherheitsprodukt 100, in das die Datenübertragungseinrichtung 200 integriert wird, ist ebenfalls markiert (Strichlierung). Im Bereich der Kreuzungsstellen des Sicherheitsfadens mit der Antenne 220 sind zusätzlich zur Antenne auf derselben Oberfläche 201 der Datenübertragungseinrichtung Ausgleichsstrukturen 180 in Form von Streifen gebildet. Jeweils einer dieser Streifen ist an den beiden Seiten der Spiralwindungsbündel angeordnet, sodass die Ausgleichsstrukturen die Bündel jeweils beidseitig einschließen. Die Streifen verlaufen wie hier gezeigt beispielsweise parallel zu den Bündeln und erstrecken sich über eine Länge, die über die Überlappungsbereiche zwischen dem Sicherheitsfaden einerseits und den Spiralwindungen andererseits hinausgeht. Alternativ zu der hier gezeigten Anordnung und Form der Ausgleichsstrukturen können senkrecht zum Verlauf der Antennenstrukturen oder in noch einer anderen Ausrichtung verlaufende Streifen vorliegen, oder die Strukturen können auch durch Freiformen gebildet sein.

In Fig. 3 ist eine Anordnung von Folienlagen 121, 122, 123, 124, 125 zur Herstellung des erfindungsgemäßen Wert- oder Sicherheitsproduktes 100, nämlich der Wert- oder Sicherheitskarte, angegeben, wobei unterhalb der kontaktlosen Datenübertragungseinrichtung 200 liegende Folienlagen nicht gezeigt sind. Dort können zusätzlich beispielsweise noch eine weitere Schutzfolie und weitere Folienlagen angeordnet sein. Die Querschnittsdarstellung von Fig. 3 (sowie von Fig. 4, nachfolgend) ist als Schnitt entlang III - III in Fig. 1 vorgenommen. Somit wird der Sicherheitsfaden 190 längs geschnitten. Die Folienlagen sind zur Veranschaulichung zueinander beabstandet gezeigt.

Die Formate der Folienlagen 121, 122, 123, 124, 125 sind im fertigen Produkt jeweils gleich. Sie liegen passergenau übereinander. Allerdings ist es zum Zwecke der wirtschaftlichen Herstellweise vorteilhaft, zunächst einen Laminatkörper 120 zu erzeugen, der mehrere Wert- oder Sicherheitsprodukte 100 enthält, und die Wert- oder Sicherheitsprodukte aus dem Laminatkörper anschließend zu vereinzeln, beispielsweise durch Ausstanzen.

Von oben gesehen weist der Folienstapel 128 eine transparente Schutzfolie 125, darunter eine opake Polymerlage 124 mit einem darauf aufgeklebten Sicherheitsfaden 190, darunter eine (transparente, transluzente oder opake) Fließfolienlage 123, darunter eine (transparente, transluzente oder opake) Ausgleichslage 122 und darunter die erfindungsgemäße kontaktlose Datenübertragungseinrichtung 200 auf. Die Datenübertragungsvorrichtung kann beispielsweise eine opake Folienlage 121 aufweisen. Auf der Datenübertragungseinrichtung sind die Spiralwindungen 130 und jeweils ein Streifen der Ausgleichsstrukturen 180, der diese jeweils seitlich begrenzt, erkennbar. Diese Strukturen sind jeweils senkrecht angeschnitten. In Fig. 3 ist sowohl das gemäß Fig. 2 am unteren Rand der Karte 100 verlaufende Spiralwindungsbündel und das am oberen Rand verlaufende Spiralwindungsbündel erkennbar. Die Schritte (a), (b) und (c) des erfindungsgemäßen Herstellverfahrens (Bereitstellen einer ersten Folienlage 121 und einer zweiten Folienlage 124 sowie gegebenenfalls weiterer Folienlagen 122, 123, 125, Aufbringen mindestens einer elektrischen Leiterstruktur auf eine der Oberflächen der ersten Folienlage sowie Aufbringen einer Sicherheitskomponente 190 auf eine der Oberflächen 191 der zweiten Folienlage 124) sind damit in dieser Figur wiedergegeben.

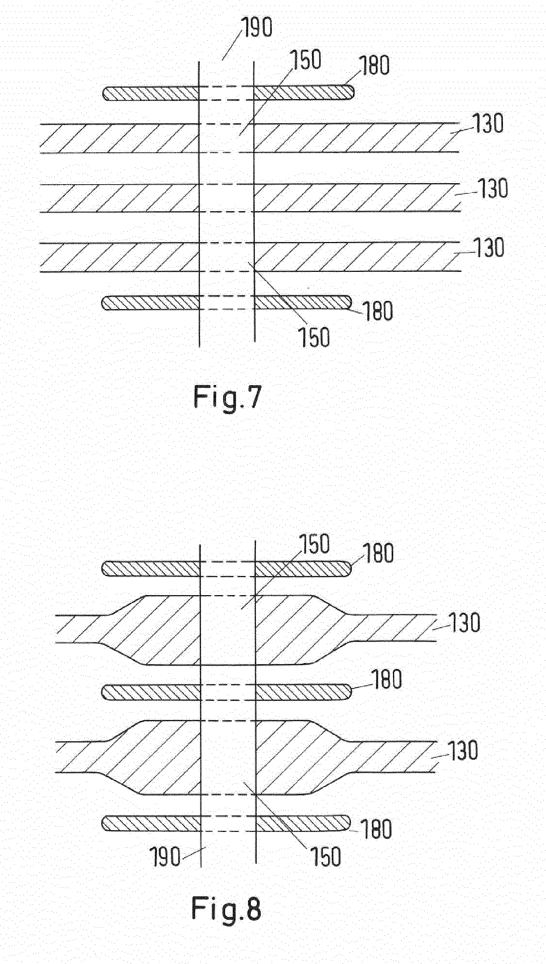

In Fig. 4 ist dargestellt, dass die Folienlagen 121, 122, 123, 124, 125 zusammengetragen, aufeinander gelegt und miteinander laminiert sind. Dabei bilden die Folienlagen einen Laminatkörper 120. Aus Gründen der Veranschaulichung erscheinen die einzelnen Folienlagen in Fig. 4 noch voneinander getrennt. Je nach Art der miteinander laminierten Folienlagen können diese gegebenenfalls miteinander verschmelzen, sodass keine Phasengrenzen mehr erkennbar sind. Die Spiralwindungen 130 und die Ausgleichsstrukturen 180 sind im Bereich der Phasengrenze zwischen der die Datenübertragungseinrichtung 200 bildenden Folienlage 121 und der darüber liegenden Ausgleichslage 122 eingebettet. Somit gibt Fig. 4 den Schritt (d) des erfindungsgemäßen Herstellverfahrens an (Zusammentragen und Laminieren der ersten Folienlage 121 und der zweiten Folienlage 124 sowie der gegebenenfalls vorliegenden weiteren Folienlagen 122, 123, 125, sodass die mindestens eine elektrische Leiterstruktur 130 in einer innenliegenden ersten Ebene 111 und die mindestens eine Sicherheitskomponente (der Sicherheitsfaden) 190 in einer zweiten Ebene 112 angeordnet sind und sodass die mindestens eine Sicherheitskomponente die mindestens eine elektrische Leiterstruktur in mindestens einen Überlappungsbereich 150 (Fig. 7, 8, 9) überlappt). Der Sicherheitsfaden kreuzt die Spiralwindungen.

Alternativ zu der vorstehend erläuterten Ausführungsform könnte sich die Sicherheitskomponente 190, hier der Hologrammstreifen, auch an der Unterseite der ersten Folienlage 121 befinden. Auch in diesem Falle würde die mindestens eine elektrische Leiterstruktur 130 in einer innenliegenden ersten Ebene 111 und die mindestens eine Sicherheitskomponente (der Sicherheitsfaden) 190 in einer zweiten Ebene 112 liegen, wobei die zweite Ebene dann unterhalb der ersten Folienlage 121 angeordnet wäre.

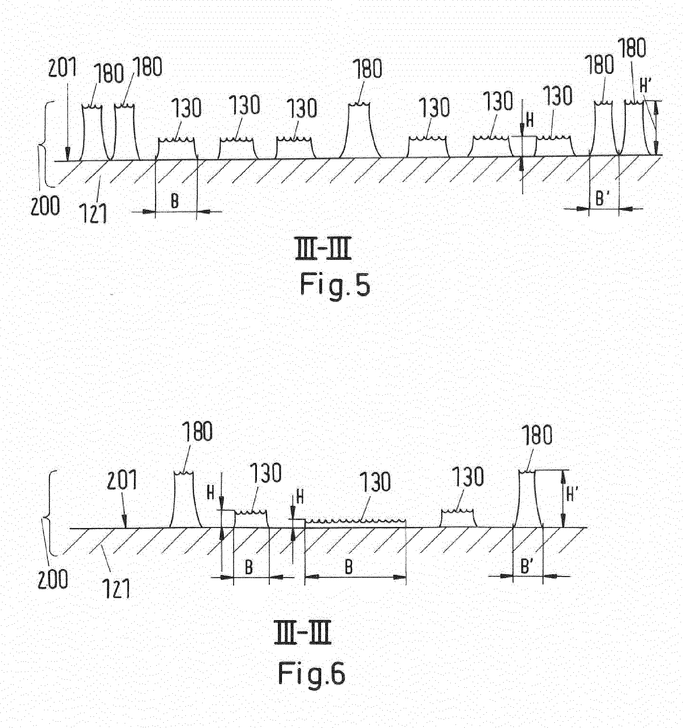

In Fig. 5 ist eine erste Ausführungsform von Leiterstrukturen 130 (Spiralwindungen der Antenne) und Ausgleichsstrukturen 180 (vorliegend in Form von Streifen) gemäß der vorliegenden Erfindung gezeigt. Diese Strukturen sind wiederum auf derselben Oberfläche 201 einer Folienlage 121 gebildet, vorzugsweise auf der Folienlage der kontaktlosen Datenübertragungseinrichtung 200.

Im vorliegenden Falle sind sechs Leiterstrukturen 130 und fünf Ausgleichsstrukturen 180 vorhanden. Die Leiterstrukturen und Ausgleichsstrukturen sind in einer Form gezeigt, die einem durch Siebdruck erhältlichen Querschnittsprofil entsprechen: Die jeweiligen Flanken der Strukturen sind zwar steil abfallend, jedoch nicht senkrecht. Sie münden wegen der Oberflächenspannung auch relativ flach in die Oberfläche der Folienlage. Die Dachoberflächen der Strukturen sind nicht glatt sondern leicht rau ausgebildet. Die Strukturen werden gemeinsam und gleichzeitig mit demselben Material, beispielsweise einer üblichen Silberleitpaste, auf die Folienlage 121 aufgedruckt. Die Breite B, B` der Strukturen ist unterschiedlich: Die Ausgleichsstrukturen sind relativ schmal, und die Leiterstrukturen sind relativ breit. Dadurch variiert auch die Höhe H, H` der einzelnen Strukturen: Wegen der geringeren Breite B` der Ausgleichsstrukturen weisen diese eine verhältnismäßig große Höhe H' auf, während die eher breiten Leiterstrukturen relativ niedrig sind (Höhe H).

Jeweils drei Leiterstrukturen 130 sind zu einem Bündel mit geringem Abstand dazwischen zusammengefasst. Zwischen den beiden Bündeln befindet sich eine einzelne Ausgleichsstruktur 180. Beidseitig zu dem Ensemble aus den beiden Leiterstruktur-Bündeln und der mittigen Ausgleichsstruktur ist jeweils eine Gruppe aus zwei Ausgleichsstrukturen angeordnet. Durch den Siebdruck werden die schmaleren Ausgleichsstrukturen höher ausgedruckt. Diese befinden sich in geringem Abstand zueinander und zu dem jeweils benachbarten Leiterstruktur-Bündel. Indem jeweils zwei derartig hohe Ausgleichsstrukturen an beiden Seiten der Leiterstrukturen gebildet werden, wird eine insgesamt breite und hohe Gesamtstruktur zum Abfangen des Druckes beim Laminieren in den Randbereichen erzeugt. Die Leiterstrukturen und die Ausgleichsstrukturen sind in diesem Beispiel jeweils durch Streifen gebildet, wobei sich die Ausgleichsstruktur-Streifen nur über eine begrenzte Länge erstrecken. Die Leiterstrukturen und Ausgleichsstrukturen verlaufen parallel zueinander. Somit sind die Leiterstrukturen und Ausgleichsstrukturen beispielsweise entsprechend den Anordnungen der dritten, vierten und fünften Ausführungsform gemäß Fig. 7, 8, 9 ausgebildet.

Bei Ausübung eines punktuellen Druckes von einer darüber liegenden Folienlage 122, der beim Laminieren durch den darüber liegenden Sicherheitsfaden 190 erzeugt wird, fangen die Ausgleichsstrukturen 180 diesen Druck zuerst ab, da sie höher sind als die Leiterstrukturen 130. Die jeweils beiden seitlichen Ausgleichsstrukturen nehmen eine seitlich auf die Leiterstrukturen wirkende Kraft auf, während die mittlere Ausgleichsstruktur eine mittig nach unten wirkende Kraft nach unten ableitet. Indem seitlich jeweils zwei Ausgleichsstrukturen vorgesehen sind, kann an dieser Stelle ein höherer Druck abgefangen werden.

In Fig. 6 ist eine zweite Ausführungsform der vorliegenden Erfindung dargestellt. In diesem Falle sind lediglich drei Leiterstrukturen 130 in einem Spiralwindungsbündel zusammengefasst. Jeweils eine Ausgleichsstruktur 180 ist an jeder Seite dieses Bündels angeordnet. Da die Breite B` der Ausgleichsstrukturen deutlich geringer ist als die Breite B der Leiterstrukturen, ist die Höhe H` der Ausgleichsstrukturen auch größer als die Höhe H der Leiterstrukturen. Auch die Leiterstrukturen weisen eine unterschiedliche Breite B auf, sodass deren Höhen ebenfalls unterschiedlich groß sind: Die mittlere Leiterstruktur ist deutlich breiter als die beiden äußeren Leiterstrukturen, sodass die mittlere Leiterstruktur auch niedriger ist als die beiden äußeren. Durch die größere Breite der mittleren Leiterstruktur ist deren Neigung zu Anrissen noch weiter verringert. Die Leiterstrukturen können beispielsweise parallel verlaufen. Jedoch muss deren Breite nicht notwendigerweise entlang des gesamten Verlaufes gleich breit sein. Beispielsweise kann die mittlere Leiterstruktur ausschließlich im Kreuzungsbereich und in dessen Umgebung mit dem Sicherheitsfaden die angezeigte Breite aufweisen, während sie ansonsten schmaler ist (entsprechend der vierten Ausführungsform von Fig. 8). In dem breiteren Bereich würde diese Leiterstruktur aufgrund der Siebdrucktechnik niedriger sein.

In Fig. 7 ist eine dritte Ausführungsform der vorliegenden Erfindung gezeigt, in diesem Falle in einer Draufsicht zusammen mit dem Sicherheitsfaden 190. Etwaige opake Folienlagen, etwa die den Sicherheitsfaden tragende Folienlage 124, die Fließfolienlage 123 und die Ausgleichslage 122, sind ausgeblendet, um die relevanten Strukturen sichtbar zu machen. Diese Ausführungsform entspricht derjenigen von Fig. 6, wobei allerdings alle Leiterstrukturen 130 gleich breit und damit auch gleich hoch sind. Jeweils eine Ausgleichsstruktur 180 flankiert das Bündel aus den drei Leiterstrukturen über eine Länge von jeweils ca. 200 %, bezogen auf die Breite des Sicherheitsfadens, nach jeder Seite. Der Sicherheitsfaden überlappt die Leiterstrukturen 130 in Überlappungsbereichen 150.

In Fig. 8 ist eine vierte Ausführungsform der vorliegenden Erfindung gezeigt, ebenfalls in einer Draufsicht zusammen mit dem Sicherheitsfaden 190, wobei opake Folienlagen, etwa die den Sicherheitsfaden tragende Folienlage 124, die Fließfolienlage 123 und die Ausgleichslage 122, ausgeblendet sind. In dieser Ausführungsform sind zwischen den beiden benachbarten Leiterstrukturen 130 eine Ausgleichsstruktur 180 und beidseitig zu den Leiterstrukturen außen jeweils noch eine weitere Ausgleichsstruktur 180 angeordnet. Auch in diesem Falle überlappt der Sicherheitsfaden 190 die Leiterstrukturen 130 in Überlappungsbereichen 150. Die beiden Leiterstrukturen verbreitern sich im Bereich der Flankierung durch die Ausgleichsstrukturen. Dadurch sind die Leiterstrukturen in diesem Bereich auch niedriger als in dem übrigen Verlauf außerhalb der Flankierung. Dies liegt an der Siebdrucktechnik. Durch die Verbreiterung und Verringerung der Höhe wird die Neigung, durch Ausübung des punktuellen Druckes beim Laminieren Anrisse oder gar Unterbrechungen zu verursachen, deutlich vermindert, weil zum einen eine breitere Struktur weniger zum Durchreißen neigt und zum anderen deren geringere Höhe H gegenüber der Höhe H' der Ausgleichsstrukturen dazu führt, dass die Leiterstrukturen einem geringeren Druck ausgesetzt sind.

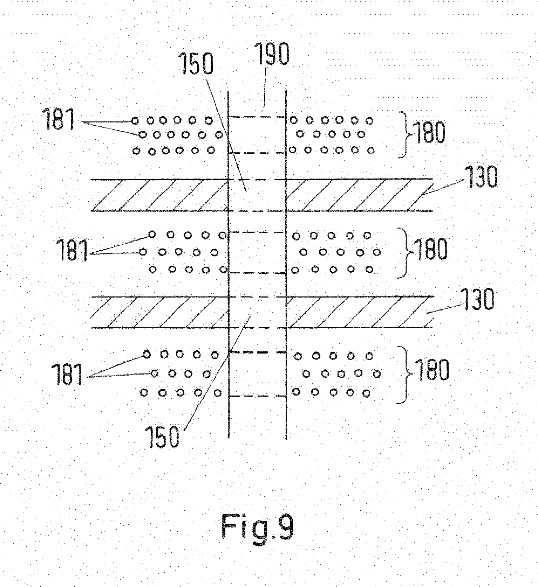

In Fig. 9 ist eine fünfte Ausführungsform der vorliegenden Erfindung gezeigt, ebenfalls in einer Draufsicht zusammen mit dem Sicherheitsfaden 190, wobei opake Folienlagen, etwa die den Sicherheitsfaden tragende Folienlage 124, die Fließfolienlage 123 und die Ausgleichslage 122, ausgeblendet sind. In dieser Ausführungsform sind wieder zwei parallel zueinander verlaufende Leiterstrukturen 130 vorhanden, deren Breite B und Höhe H konstant sind, sowie eine mittige Gruppe von Ausgleichsstrukturen 180 zwischen den beiden Leiterstrukturen und jeweils eine äußere Gruppe von Ausgleichsstrukturen 180 an den beiden Seiten der beiden Leiterstrukturen. Auch in diesem Falle überlappt der Sicherheitsfaden 190 die Leiterstrukturen 130 in Überlappungsbereichen 150. Die Gruppen aus Ausgleichsstrukturen sind jeweils durch Druckpunkte 181 gebildet, die in Form von kleinen kreisförmigen Flächen ausgebildet sind. Durch die kleinen lateralen Abmessungen ist die Höhe dieser Strukturen verhältnismäßig groß. Diese Flächen liegen in einem hexagonalen Raster vor, d.h. versetzt zueinander angeordnet, und zwar in drei Reihen. Die Raster bilden Bänder, die wiederum parallel zu den Leiterstrukturen verlaufen.

### Bezugszeichen:

- 100: Wert- oder Sicherheitsprodukt (-karte)
- 101: Vorderseite
- 105: Informationsfeld
- 106: Informationsfeld
- 107: Informationsfeld
- 111: erste Ebene
- 112: zweite Ebene
- 120: Laminatkörper
- 121: Lage des Laminatkörpers, (erste) Folienlage
- 122: Lage des Laminatkörpers, (weitere) Folienlage, Ausgleichslage
- 123: Lage des Laminatkörpers, (weitere) Folienlage, Fließfolienlage
- 124: Lage des Laminatkörpers, Polymerlage, (zweite) Folienlage
- 125: Lage des Laminatkörpers, (weitere) Folienlage, Schutzfolie
- 128: Folienstapel
- 130: elektrische Leiterstruktur, Leiterbahn, Spiralwindungen
- 131: Spiralwindung
- 132: Spiralwindung
- 133: Spiralwindung
- 150: Überlappungsbereich
- 180: Ausgleichsstruktur
- 181: Druckpunkt
- 190: Sicherheitskomponente, Sicherheitsfaden, Hologrammfaden
- 191: Oberfläche der zweiten Folienlage
- 200: kontaktlose Datenübertragungseinrichtung
- 201: Oberfläche der ersten Folienlage, Vorderseite
- 210: elektronisches Schaltungselement, Halbleiterchip
- 215: Anschlussfeld
- 220: Antenne(nstruktur)
- 221: Leiterbahnende
- 222: Leiterbahnende
- 230: innere Durchtrittsfläche
- B: Breite einer Leiterstruktur
- B': Breite einer Ausgleichsstruktur
- H: Höhe einer Leiterstruktur
- H`: Höhe einer Ausgleichsstruktur

## Patentansprüche

1. Wert- oder Sicherheitsprodukt (100) in Form eines aus mindestens zwei Folienlagen (121, 122, 123, 124, 125) gebildeten Laminatkörpers (120) mit mindestens einer in einer innenliegenden ersten Ebene (111) in dem Laminatkörper (120) angeordneten elektrischen Antennenstruktur (130, 220) sowie mit mindestens einer die mindestens eine elektrische Antennenstruktur (130, 220) in mindestens einem Überlappungsbereich (150) überlappenden und sich in einer zweiten Ebene (112) befindenden Sicherheitskomponente (190),
wobei sich in dem Laminatkörper (120) benachbart zu dem mindestens einen Überlappungsbereich (150) mindestens eine auf eine der mindestens zwei Folienlagen (121, 122, 123, 124, 125) aufgebrachte Ausgleichsstruktur (180) befindet, deren Höhe (H`) mindestens genauso groß ist wie die Höhe (H) der mindestens einen elektrischen Antennenstruktur (130, 220) in dem mindestens einen Überlappungsbereich (150), **dadurch gekennzeichnet, dass** die mindestens eine Ausgleichsstruktur (180) in Form von Erhebungen in geringem Abstand parallel zur mindestens einen Antennenstruktur (130,220) vorliegt.

2. Wert- oder Sicherheitsprodukt (100) nach Anspruch 1, **dadurch gekennzeichnet, dass** die mindestens eine Ausgleichsstruktur (180) in der ersten Ebene (111) angeordnet ist.

3. Wert- oder Sicherheitsprodukt (100) nach einem der vorstehenden Ansprüche, **dadurch gekennzeichnet, dass** die Antennenstruktur (130, 220) durch mindestens zwei Spiralwindungen (131, 132, 133) gebildet ist.

4. Wert- oder Sicherheitsprodukt (100) nach einem der vorstehenden Ansprüche, **dadurch gekennzeichnet, dass** die Breite (B) der mindestens einen elektrischen Antennenstruktur (130, 220) in dem mindestens einen Überlappungsbereich (150) größer ist als in mindestens einem Bereich außerhalb des mindestens einen Überlappungsbereiches (150).

5. Wert- oder Sicherheitsprodukt (100) nach einem der vorstehenden Ansprüche, **dadurch gekennzeichnet, dass** die mindestens eine elektrische Antennenstruktur (130, 220) mittels Siebdruck mit einer Leitpaste oder Leittinte gebildet ist.

6. Wert- oder Sicherheitsprodukt (100) nach einem der vorstehenden Ansprüche, **dadurch gekennzeichnet, dass** die mindestens eine Sicherheitskomponente (190) durch einen Sicherheitsfaden gebildet ist.

7. Wert- oder Sicherheitsprodukt (100) nach Anspruch 6, **dadurch gekennzeichnet, dass** der Sicherheitsfaden durch einen Hologrammfaden gebildet ist.

8. Wert- oder Sicherheitsprodukt (100) nach einem der vorstehenden Ansprüche, **dadurch gekennzeichnet, dass** die mindestens eine Ausgleichsstruktur (180) mittels Siebdruck mit einer Leitpaste oder Leittinte erzeugt ist.

9. Wert- oder Sicherheitsprodukt (100) nach einem der vorstehenden Ansprüche, **dadurch gekennzeichnet, dass** die mindestens eine elektrische Antennenstruktur (130, 220) jeweils mindestens zwei Spiralwindungen (131, 132, 133) aufweist und dass die mindestens eine Ausgleichsstruktur (180) neben den mindestens zwei Spiralwindungen (131, 132, 133) und/oder zwischen den mindestens zwei Spiralwindungen (131, 132, 133) gebildet ist.

10. Kontaktlose Datenübertragungseinrichtung (200), die zu einem Wert- oder Sicherheitsprodukt (100) gemäß einem der vorstehenden Ansprüche weiterverarbeitet werden kann, aufweisend mindestens eine Folienlage (121) mit mindestens einer auf einer Oberfläche (201) einer der mindestens einen Folienlage (121) angeordneten Antennenstruktur (130, 220) und mit mindestens einem mit der mindestens einen Antennenstruktur (130, 220) verbundenen elektronischen Schaltungselement (210),
wobei auf eine der Oberflächen (201) der mindestens einen Folienlage (121) zusätzlich mindestens eine Ausgleichsstruktur (180) aufgebracht ist, deren Höhe (H`) mindestens genauso groß ist wie die Höhe (H) der mindestens einen elektrischen Antennenstruktur (130, 220),
**dadurch gekennzeichnet, dass** die mindestens eine Ausgleichsstruktur (180) in Form von Erhebungen in geringem Abstand parallel zur mindestens einen Antennenstruktur (130,220) vorliegt.

11. Verfahren zur Herstellung eines Wert- oder Sicherheitsproduktes (100), umfassend die folgenden Verfahrensschritte:
(a) Bereitstellen einer ersten Folienlage (121) und einer zweiten Folienlage (124) sowie gegebenenfalls weiterer Folienlagen (122, 123, 125),
(b) Erzeugen mindestens einer elektrischen Antennenstruktur (130, 220) auf einer der Oberflächen (201) der ersten Folienlage (121),
(c) Aufbringen einer Sicherheitskomponente (190) auf eine der Oberflächen (191) der zweiten Folienlage (124),
(d) Zusammentragen und Laminieren der ersten Folienlage (121) und der zweiten Folienlage (124) sowie der gegebenenfalls vorliegenden weiteren Folienlagen (122, 123, 125), sodass die mindestens eine elektrische Antennenstruktur (130, 220) in einer innenliegenden ersten Ebene (111) und die mindestens eine Sicherheitskomponente (190) in einer zweiten Ebene (112) angeordnet sind und dass die mindestens eine Sicherheitskomponente (190) die mindestens eine elektrische Antennenstruktur (130, 220) in mindestens einem Überlappungsbereich (150) überlappt,
wobei vor Verfahrensschritt (d) außerdem auf eine der Oberflächen (201) einer der ersten, zweiten oder gegebenenfalls weiteren Folienlagen (121, 122, 123, 124, 125) benachbart zu dem mindestens einen Überlappungsbereich (150) mindestens eine Ausgleichsstruktur (180) aufgebracht wird, deren Höhe (H`) mindestens genauso groß ist wie die Höhe (H) der mindestens einen elektrischen Antennenstruktur (130, 220) in dem Überlappungsbereich (150),
**dadurch gekennzeichnet, dass** die mindestens eine Ausgleichsstruktur (180) in Form von Erhebungen in geringem Abstand parallel zur mindestens einen Antennenstruktur (130,220) aufgebracht wird.

12. Verfahren zur Herstellung eines Wert- oder Sicherheitsproduktes (100) nach Anspruch 11, **dadurch gekennzeichnet, dass** die mindestens eine Ausgleichsstruktur (180) auf die mit der mindestens einen elektrischen Antennenstruktur (130, 220) versehene Oberfläche (201) der ersten Folienlage (121) aufgebracht wird.

13. Verfahren zur Herstellung eines Wert- oder Sicherheitsproduktes (100) nach einem der Ansprüche 11 und 12, **dadurch gekennzeichnet, dass** die mindestens eine Ausgleichsstruktur (180) gleichzeitig mit der mindestens einen elektrischen Antennenstruktur (130, 220) auf die Oberfläche (201) der ersten Folienlage (121) aufgebracht wird.

14. Verfahren zur Herstellung eines Wert- oder Sicherheitsproduktes (100) nach einem der Ansprüche 11 bis 13, **dadurch gekennzeichnet, dass** die mindestens eine elektrische Antennenstruktur (130, 220) mittels Siebdruck mit einer Leitpaste oder Leittinte gebildet wird.

## Claims

1. A value or security product (100) in the form of a laminate body (120) formed by at least two film layers (121, 122, 123, 124, 125) with at least one electrical antenna structure (130, 220) arranged in an inner first plane (111) in the laminate body (120) and with at least one security component (190) overlapping the at least one electrical antenna structure (130, 220) in at least one overlapping area (150) and located in a second plane (112),
wherein in the laminate body (120) adjacent to the at least one overlapping area (150) at least one compensation structure (180) is located which is applied to one of the at least two film layers (121, 122, 123, 124, 125), the height (H') of which is at least as great as the height (H) of the at least one electrical antenna structure (130, 220) in the at least one overlapping area (150),
**characterized in that** the at least one compensation structure (180) is provided in the form of elevations at a small distance parallel to at least one antenna structure (130, 220).

2. The value or security product (100) according to claim 1, **characterized in that** the at least one compensation structure (180) is arranged in the first plane (111).

3. The value or security product (100) according to any one of the preceding claims, **characterized in that** the antenna structure (130, 220) is formed by at least two spiral windings (131, 132, 133).

4. The value or security product (100) according to any one of the preceding claims, **characterized in that** the width (B) of the at least one electrical antenna structure (130, 220) is greater in the at least one overlapping area (150) than in at least one area outside the at least one overlapping area (150) .

5. The value or security product (100) according to any one of the preceding claims, **characterized in that** the at least one electrical antenna structure (130, 220) is formed by screen printing with a conductive paste or conductive ink.

6. The value or security product (100) according to any one of the preceding claims, **characterized in that** the at least one security component (190) is formed by a security thread.

7. The value or security product (100) according to claim 6, **characterized in that** the security thread is formed by a hologram thread.

8. The value or security product (100) according to any one of the preceding claims, **characterized in that** the at least one compensation structure (180) is produced by screen printing with a conductive paste or conductive ink.

9. The value or security product (100) according to any one of the preceding claims, **characterized in that** the at least one electrical antenna structure (130, 220) has at least two spiral windings (131, 132, 133) respectively and **in that** the at least one compensation structure (180) is formed next to the at least two spiral windings (131, 132, 133) and/or between the at least two spiral windings (131, 132, 133).

10. A contactless data transmission device (200), which can be processed further into a value or security product (100) according to any one of the preceding claims, having at least one film layer (121) with at least one antenna structure (130, 220) arranged on a surface (201) of one of the at least one film layers (121) and with at least one electronic circuit element (210) connected to the at least one antenna structure (130, 220),
wherein at least one compensation structure (180) is applied additionally onto one of the surfaces (201) of the at least one film layer (121), the height (H') of which compensation structure is at least as great as the height (H) of the at least one electrical antenna structure (130, 220),
**characterized in that** the at least one compensation structure (180) is provided in the form of elevations at a small distance parallel to the at least one antenna structure (130, 220) .

11. A method for producing a value or security product (100), comprising the following method steps:
(a) providing a first film layer (121) and a second film layer (124) and if necessary further film layers (122, 123, 125),
(b) producing at least one electrical antenna structure (130, 220) on one of the surfaces (201) of the first film layer (121),
(c) applying a security component (190) onto one of the surfaces (191) of the second film layer (124),
(d) collating and laminating the first film layer (121) and the second film layer (124) and any further film layers (122, 123, 125), so that the at least one electrical antenna structure (130, 220) is arranged in an inner first plane (111) and the at least one security component (190) is arranged in a second plane (112), and in that the at least one security component (190) overlaps the at least one electrical antenna structure (130, 220) in at least one overlapping area (150),
wherein before method step (d) at least one compensation structure (180), whose height (H') is at least as great as the height (H) of the at least one electrical antenna structure (130, 220) in the overlapping area (150), is also applied to one of the surfaces (201) of one of the first, second or optionally further film layers (121, 122, 123, 124, 125) adjacent to the at least one overlapping area (150),
**characterized in that** the at least one compensation structure (180) is provided in the form of elevations at a small distance parallel to the at least one antenna structure (130, 220) .

12. The method for producing a value or security product (100) according to claim 11, **characterized in that** the at least one compensation structure (180) is applied to the surface (201) of the first film layer (121) provided with the at least one electrical antenna structure (130, 220).

13. The method for producing a value or security product (100) according to any one of claims 11 and 12, **characterized in that** the at least one compensation structure (180) is applied to the surface (201) of the first film layer (121) at the same time as the at least one electrical antenna structure (130, 220).

14. The method for producing a value or security product (100) according to any one of claims 11 to 13, **characterized in that** the at least one electrical antenna structure (130, 220) is formed by screen printing with a conductive paste or conductive ink.

## Revendications

1. Produit de valeur ou de sécurité (100) sous forme d'un corps laminé (120) constitué d'au moins deux couches de film (121, 122, 123, 124, 125) avec au moins une structure d'antenne électrique (130, 220) disposée dans le corps laminé (120) dans un premier niveau interne (111), ainsi qu'avec au moins un composant de sécurité (190) qui se trouve dans un second niveau (112) et qui chevauche l'au moins une structure d'antenne (130, 220) dans au moins une zone de chevauchement (150),
dans lequel au moins une structure d'équilibrage (180) appliquée sur l'une des au moins deux couches de film (121, 122, 123, 124, 125) voisine de l'au moins une zone de chevauchement (150) dans le corps laminé (120), dont la hauteur (H') est au moins aussi grande que la hauteur (H) de l'au moins une structure d'antenne (130, 220) dans l'au moins une zone de chevauchement (150), **caractérisée en ce que** l'au moins une structure d'équilibrage (180) se présente sous forme de saillies parallèles à faible intervalle à l'au moins une structure d'antenne (130, 220).

2. Produit de valeur ou de sécurité (100) selon la revendication 1, **caractérisé en ce que** l'au moins une structure d'équilibrage (180) est disposée dans le premier niveau (111).

3. Produit de sécurité ou de valeur (100) selon l'une des revendications précédentes, **caractérisé en ce que** la structure d'antenne (130, 220) est constituée d'au moins deux enroulements en spirale (131, 132, 133).

4. Produit de sécurité ou de valeur (100) selon l'une des revendications précédentes, **caractérisé en ce que** la largeur (B) de l'au moins une structure d'antenne électrique (130, 220) dans l'au moins une zone de chevauchement (150) est plus grande que dans au moins une zone hors de l'au moins une zone de chevauchement (150).

5. Produit de sécurité ou de valeur (100) selon l'une des revendications précédentes, **caractérisé en ce que** l'au moins une structure d'antenne électrique (130, 220) est constituée par sérigraphie avec une pâte conductrice ou une encre conductrice.

6. Produit de sécurité ou de valeur (100) selon l'une des revendications précédentes, **caractérisé en ce que** l'au moins un composant de sécurité (190) est constitué d'un fil de sécurité.

7. Produit de valeur ou de sécurité (100) selon la revendication 6, **caractérisé en ce que** le fil de sécurité est constitué d'un fil holographique.

8. Produit de sécurité ou de valeur (100) selon l'une des revendications précédentes, **caractérisé en ce que** l'au moins une structure d'équilibrage (180) est fabriquée par sérigraphie avec une pâte conductrice ou une encre conductrice.

9. Produit de sécurité ou de valeur (100) selon l'une des revendications précédentes, **caractérisé en ce que** l'au moins une structure d'antenne électrique (130, 220) présente respectivement au moins deux enroulements en spirale (131, 132, 133), et **en ce que** l'au moins une structure d'équilibrage (180) est constituée à côté des au moins deux enroulements en spirale (131, 132, 133) et/ou entre les au moins deux enroulements en spirale (131, 132, 133).

10. Dispositif de transfert de données sans contact (200) qui peut être traité en un produit de sécurité ou de valeur (100) selon l'une des revendications précédentes, présentant au moins une couche de film (121) avec au moins une structure d'antenne (130, 220) disposée sur une surface (201) d'une des au moins une couche de film (121) et avec au moins un élément de commutation (210) électronique lié à au moins l'une des structures d'antenne (130, 220),
dans lequel, sur l'une des surfaces (201) de l'au moins une couche de film (121), au moins une structure d'équilibrage (180) est appliquée en plus, dont la hauteur (H') est au moins aussi grande que la hauteur (H) de l'au moins une structure d'antenne électrique (130, 220),
**caractérisé en ce que** l'au moins une structure d'équilibrage (180) se présente sous forme de saillies parallèles à faible intervalle à l'au moins une structure d'antenne (130, 220).

11. Procédé de fabrication d'un produit de sécurité ou de valeur (100) comprenant les étapes de procédé suivantes :
(a) Préparation d'une première couche de film (121) et d'une deuxième couche de film (124) ainsi que, le cas échéant, d'autres couches de film (122, 123, 125),
(b) Fabrication d'au moins une structure d'antenne électrique (130, 220) sur l'une des surfaces (201) de la première couche de film (121),
(c) Application d'un composant de sécurité (190) sur l'une des surfaces (191) de la deuxième couche de film (124),
(d) Rassemblement et laminage de la première couche de film (121) et de la deuxième couche de film (124) ainsi que, le cas échéant, des autres couches de film présentes (122, 123, 125) pour que l'au moins une structure d'antenne électrique (130, 220) soit disposée dans un premier niveau interne (111) et l'au moins un composant de sécurité (190) soit disposé dans un second niveau (112), et pour que l'au moins un composant de sécurité (190) chevauche l'au moins une structure d'antenne (130, 220) dans au moins une zone de chevauchement (150),
dans lequel, avant l'étape de procédé (d), sur l'une des surfaces (201) d'une parmi la première, la deuxième ou, le cas échéant, les autres couches de film (121, 122, 123, 124, 125) voisine de l'au moins une zone de chevauchement (150), au moins une structure d'équilibrage (180) est appliquée en plus, dont la hauteur (H') est au moins aussi grande que la hauteur (H) de l'au moins une structure d'antenne électrique (130, 220) dans la zone de chevauchement (150),
**caractérisé en ce que** l'au moins une structure d'équilibrage (180) est appliquée sous forme de saillies parallèles à faible intervalle à l'au moins une structure d'antenne (130, 220).

12. Procédé de fabrication d'un produit de valeur ou de sécurité (100) selon la revendication 11, **caractérisé en ce que** l'au moins une structure d'équilibrage (180) est appliquée sur la surface (201) de la première couche de film (121) munie de l'au moins une structure d'antenne électrique (130, 220).

13. Procédé de fabrication d'un produit de valeur ou de sécurité (100) selon l'une des revendications 11 et 12, **caractérisé en ce que** l'au moins une structure d'équilibrage (180) est appliquée en même temps que l'au moins une structure d'antenne électrique (130, 220) sur la surface (201) de la première couche de film (121),

14. Procédé de fabrication d'un produit de valeur ou de sécurité (100) selon l'une des revendications 11 à 13, **caractérisé en ce que** l'au moins une structure d'antenne électrique (130, 220) est constituée par sérigraphie avec une pâte conductrice ou une encre conductrice.
